# EUROPEAN PATENT SPECIFICATION

(11) **EP 3 837 176 B1**
(45) Date of publication and mention of the grant of the patent: **30.11.2022**
(21) Application number: 19787416.7
(22) Date of filing: 13.08.2019
(51) Int. Cl.: A24C 5/35, B65B 19/04, B65G 47/248, A24C 5/33

(54) **TRANSPORT DEVICE FOR ROD-LIKE ARTICLES OF THE TOBACCO INDUSTRY**
TRANSPORTVORRICHTUNG VON ARTIKELN DER TABAKINDUSTRIE
DISPOSITIF DE TRANSPORT D'ARTICLES DE L'INDUSTRIE DU TABAC

(30) Priority: 17.08.2018 PL 42668218
(43) Date of publication of application: 23.06.2021
(73) Proprietor: International Tobacco Machinery Poland Sp. z o.o., 26-600 Radom (PL)
(72) Inventor: SIKORA, Leszek, 26-600 Radom (PL); OWCZAREK, Radoslaw, 26-600 Radom (PL); FIGARSKI, Jacek, 26-600 Radom (PL); ZADECKI, Robert, 26-600 Radom (PL)
(74) Representative: Markieta, Jaroslaw Franciszek
(86) International application number: PCT/IB2019/056860
(87) International publication number: WO 2020/035786

(56) References cited:
- LU-A1- 42 309
- US-A- 4 827 948
- US-A- 6 023 909
- US-B2- 7 165 668

## Description

The object of the invention is a forming apparatus.

The invention belongs to tobacco industry solutions, in particular to the field of solutions applied in packing machines for tobacco industry products.

From the document US 2012/0090954 an apparatus for handling of objects is known. This apparatus comprises a handling apparatus which receives objects from a feeding area and which supplies the objects by means of a transferring apparatus to at least one workstation. The handling apparatus, respectively, simultaneously receives a specific number of objects by means of an object carrier in such a way that the transferring apparatus has multiple carrying elements for multiple objects respectively held by the handling apparatus. Furthermore, the sequence of movements of each carrying element on the transferring apparatus is individually controlled so that the handling apparatus removes respectively multiple objects from the respective carrying element after passing through at least one workstation.

From the document US6325201 an apparatus for the handling of a semi-finished product comprising a storage container for receiving a pile of semi-finished products and comprising means for supporting the pile is known. The apparatus also comprises endless conveying means for receiving successive bottommost semi-finished products from the pile, the said conveying means comprising at least one empty picking-up apparatus adapted to receive and convey semi-finished products from the pile, and supporting means conveyed by the endless conveying means for at least partial supporting of the pile between the operations of lifting the said picking-up apparatus. The endless conveying means convey multiple distant lifting apparatuses among which multiple spaced carrying elements are arranged, wherein the endless conveying means comprise a rotatable member rotating around the axis which is parallel to a plane in which the bottommost semi-finished product in the pile extends, and wherein the said carrying elements comprise laterally arranged regions having front edges which are arranged in the conveying direction so as to contain different levels of parts of the bottommost zero equivalent spontaneous to the said regions.

From the document US7165668 an apparatus for transferring rod-like articles from a longitudinal conveyor is known, whereas such apparatus transfers the articles onto a transverse conveyor. Furthermore, the apparatus comprises a conveyor which receives the articles from the longitudinal conveyor and supplies the articles to the transverse conveyor, whereas the conveyor comprises at least a first conveying element and a separate second transporting element which are configured for being functionally combined with each other. Additionally, the first conveying element is structured and positioned so that it rotates the articles by a specific angle. Furthermore, the second conveying element is structured and positioned so as to reduce the transport speed of the articles.

From the document WO2003051718 a cigarette packing machine, comprising an endless drying conveyor having at least one substantially spiral part, an input station and an output station, is known. This conveyor moves endlessly along a given path in a given direction of movement in order to feed successive cigarette batches between the said input and output stations. The apparatus is characterised in that the said drying conveyor comprises a sequence of coils out of which the first said coil extends in the said direction of movement from the said input station and is connected, at the input station, to the last-mentioned coil running through the said output station.

From the document EP1020357 a method for forming groups of rod-like articles with a determined orientation of the rod-like articles in the group is known. The rod-like articles are supplied through multiple channels, and layers of the three-layer group of rod-like articles are placed into the pockets of an endless pocket conveyor, and the groups of rod-like articles are transferred for packaging.

Also, document LU42309 is known, that shows a device for changing the orientation of articles of the tobacco industry by means of a rotational conveyor with oscillating troughs.

The object of the invention is a forming apparatus for determining the mutual spatial orientation of a group of rod-like articles of the tobacco industry, comprising a transport carriage and a transport tray provided with a number of transport grooves adapted to hold the rod-like articles, whereas the tray is fastened to the transport carriage. The apparatus according to the invention is characterised in that the transport tray is divided into two transport sections. The transport sections are adapted to shift between an open configuration in which the transport grooves are situated in substantially one plane and a closed configuration in which the transport grooves are situated in two planes which are substantially parallel to each other.

The apparatus according to the invention is further characterised in that the sections are fastened to the carriage in such a way that they rotate relative to the transport carriage relative to two axes.

The apparatus according to the invention is further characterised in that the tray is divided into two transport sections which are fastened in such a way that they rotate relative to the carriage about the axis corresponding to the direction of movement of the transport carriage.

The apparatus according to the invention is further characterised in that the sections are fastened in such a way that they rotate relative to the transport carriage about the axis parallel to the direction of movement of the transport carriage.

The apparatus according to the invention is further characterised in that the transport carriage is individually controlled and is driven by an electric linear motor.

The application of transport carriages and rotatable transport means allows increasing the flexibility of packing system designing. It is possible to design a packing system having a greater compactness and fed from multiple sources. Electromagnetically driven transport carriages as well as rotating and closing transport carriages allow conducting the transport path in a way which is unachievable for transport systems based on traditional endless chains. In addition, the application of a rotating unit allows feeding the transport apparatus from two sides.

The forming apparatus according to the invention makes it possible to check the quality of the rod-like articles, including the front surfaces of both ends as well as the component parts of the articles. Furthermore, the forming means according to the invention eliminate the need of inserting rod-like articles of the tobacco industry into a conventional storage container used in conventional packing machines, which results in a reduction of the number of damaged articles in packets and a reduction of the number of rejected packets with tobacco products.

The object of the invention is described in detail with reference to an embodiment illustrated in a drawing in which:
- Fig. 1a: shows a packing machine in a perspective view,
- Fig. 1b: shows another packing machine in a perspective view,
- Fig. 2a: shows a forming apparatus in a perspective view,
- Fig. 2b: shows another forming apparatus in a perspective view,
- Fig. 3a: shows a forming apparatus in an open configuration,
- Fig. 3b: shows another forming apparatus in an open configuration,
- Fig. 4a: shows a cross-section of the first embodiment of the forming apparatus in an open configuration,
- Fig. 4b: shows a cross-section of the first embodiment of the forming apparatus in a closed configuration,
- Fig. 5a: shows a cross-section of the second embodiment of the forming apparatus in an open configuration,
- Fig. 5b: shows a cross-section of the second embodiment of the forming apparatus in a closed configuration,
- Fig. 6a: shows diagrammatically, in a perspective view, a link of a segment conveyor in the first embodiment,
- Fig. 6b: shows diagrammatically, in a perspective view, a link of the segment conveyor in the second embodiment,
- Fig. 7: shows a transferring unit,
- Fig. 8: shows diagrammatically, in a cross-section, the transferring unit in a configuration for the transfer of rod-like articles,
- Fig. 9: shows a view of the transferring unit in a situation where a group of articles with a detected defective article is replaced by another group of rod-like articles transported by a successive forming unit,
- Fig. 10: shows a rotating station changing the segment orientation,
- Fig. 11: shows a packing station.

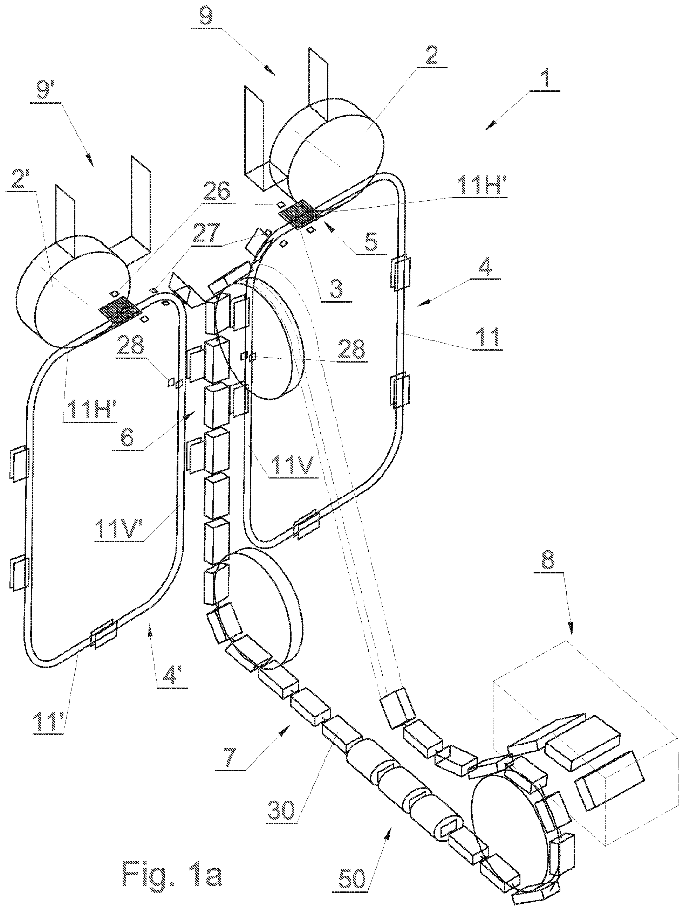

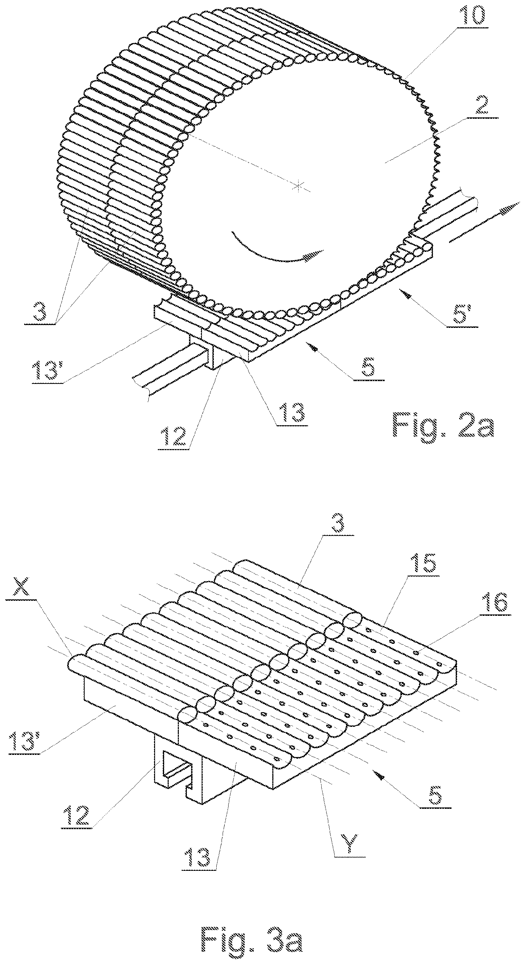

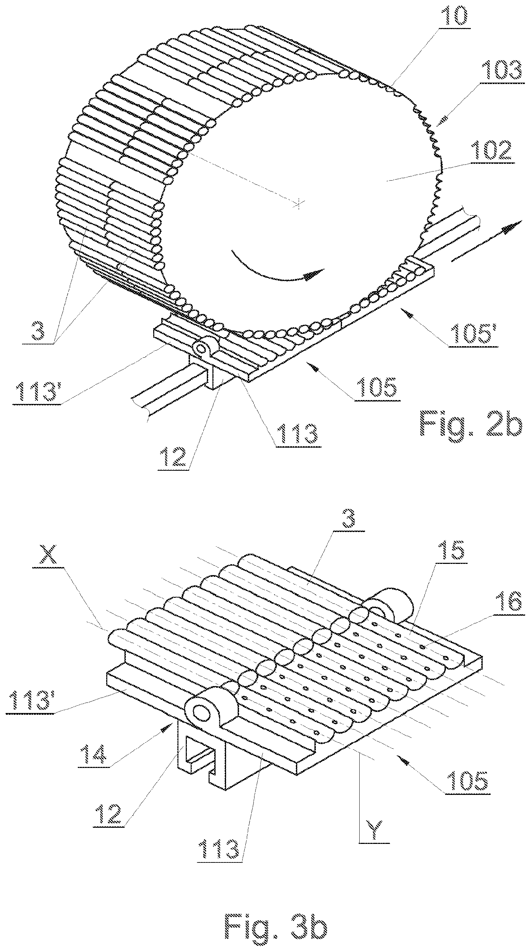

Fig. 1a shows a packing apparatus 1 comprising two drum conveyors 2, 2' for feeding rod-like articles 3, two feeding units 4, 4' provided with forming apparatuses 5, for forming and transporting groups G of the rod-like articles 3, a transferring unit 6, a segment conveyor 7 for transporting the group G of the rod-like articles 3, and a packing module 8. The drum conveyor 2, 2' is fed from the container 9, 9', whereas the feeding from the drum conveyor 2, 2' in another way, for example from another drum conveyor, is also possible. On the drum conveyor 2, 2', the rod-like articles 3 are transported in grooves 10 from which the rod-like articles 3 are transferred to the forming apparatus 5 (Fig. 2a). The arrows show the direction of rotation of the drum conveyor 2 and the direction of movement of the forming apparatus 5. The forming apparatus 5 belongs to the feeding unit 4, 4', whereas the feeding unit 4, 4' may be provided with multiple forming apparatuses 5 moving along a guide 11, 11' independently of one another. The feeding unit 4, 4' is situated in a vertical plane, whereas the guide 11, 11' in the feeding unit 4, 4' for conveying the rod-like articles 3 has a horizontal section 11H, 11H' and a vertical section 11V, 11V'. The transferring of the rod-like articles 3 from the drum conveyor 2, 2' to the forming apparatus 5 takes place in the horizontal section 11H, 11H'. The forming apparatus 5 is provided with a carriage 12, whereas on the transport carriage 12 there are two transport sections 13, 13', and the transport sections 13, 13' are fastened to a mechanism 14 which is adapted to change the mutual position of the transport sections 13, 13'. In Fig. 2a, the transport sections 13, 13' are situated so that the grooves 15 are in one plane. As shown in Fig. 3a, the transport section 13, 13' has the form of a plate provided with multiple grooves 15, whereas the groove 15 has a diameter adapted to the diameter of the rod-like article 3, and the axis X of the rod-like article 3 substantially overlaps the axis Y of the groove 15, whereas the axes Y of the grooves 15 are situated in one plane k. In addition, the groove 15 is provided with openings 16 supplying the vacuum necessary to hold the rod-like article 3 in the groove 15. Fig. 3a shows the unfilled transport section 13, whereas the transport section 13' has all grooves filled with the rod-like articles 3. The drum conveyor 2 is provided with the grooves 10 on the entire circumference, whereas Fig. 2b shows an embodiment of the drum conveyor 102 which is provided with the grooves 10 grouped in sections 103. The drum conveyor 102 is adapted to transfer the rod-like articles 3 into the grooves 15 of the transport sections 113, 113' shown in Fig. 3b. The grooves 15 are arranged so that the sections 113, 113' of the successive forming apparatuses 105, 105' receive the rod-like articles 3 from the successive sections 103 of the drum conveyor 102. The sections 113, 113' are connected with one another by means of a mechanism 14 which is shown in simplified terms. The carriage 12 is also showed in simplified terms.

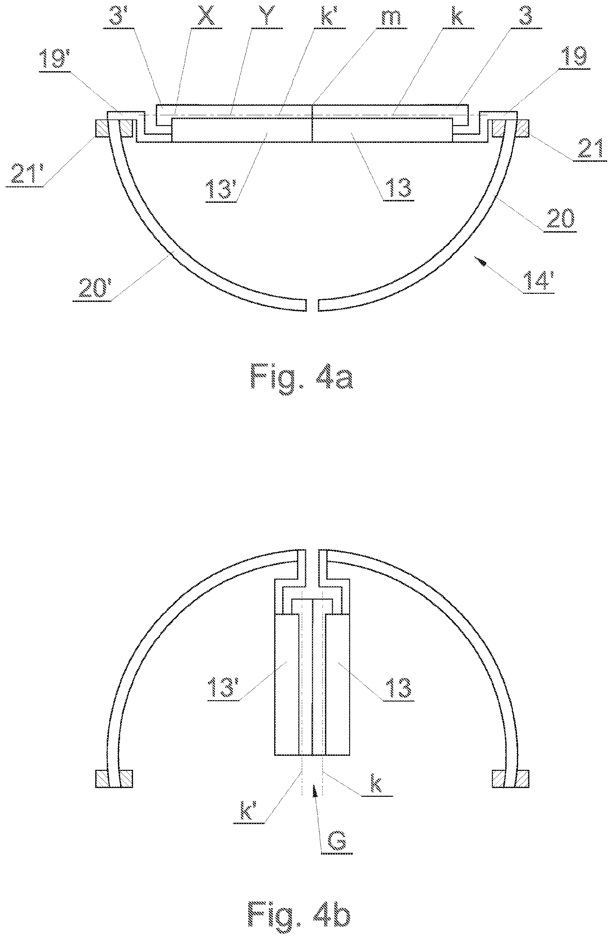

The transport sections 13, 13' of the forming apparatuses 5, 5' are adapted to change the configuration of their mutual position. In the open configuration, the movable transport sections 13, 13' are situated next to each other (Fig. 4a) in such a way that the planes k, k' of both transport sections 13, 13' overlap. In the closed configuration, the planes k, k' of both transport sections 13, 13' are situated parallel to each other at a distance equal to about one diameter of the rod-like article 3, the transport sections 13, 13' are situated in a position which may be described as a mirror-image position (Fig. 4b). A change of configuration of the transport sections 13 from the open configuration to the closed configuration takes place at the time of movement along the guide 11 at the sections 11H, 11H', 11V, 11V' between the drum conveyor 2, 2' and the transferring unit 6. The change of configuration may take place by means of cams or by means of actuator-type elements which will enforce a change of position of the transport sections 13. The change of configuration may be done in any other way. Figs. 4a and 4b show an embodiment of the mechanism 14' for changing the position of the transport sections 13, 13'. Fig. 4a shows the transport sections 13 before a rotation in the open configuration where the grooves 15 of the transport section 13 are situated in the plane k overlapping the plane k' of the grooves 15 of the transport section 13', whereas Fig. 4b shows the transport sections 13, 13' in the closed configuration after a rotation around the axis m where the grooves 15 of both transport sections 13, 13' are situated in two planes k, k' which are parallel to each other. The axis m is parallel to the direction of movement of the transport carriage 12 or corresponds to the direction of movement of such carriage. The transport section 13, 13' is attached to a bracket 19, 19' which is connected with an arched guiding element 20, 20'. The arched guiding element 20, 20' is slidably mounted in a guide 21, 21' in such a way that during the change of configuration the rod-like articles 3, 3' rotate around the axis m. After the change of configuration of the transport sections 13, 13', the planes k, k' are situated parallel to each other and are at a distance of about one diameter of the rod-like article 3, in other words, the grooves 15 and the rod-like article 3 layers are situated in two planes which are parallel to each other, whereas in the closed configuration a group G of the rod-like articles 3 is formed wherein the mutual position of the rod-like articles 3 is such as needed to place the group G into the pocket of the segment conveyor 7.

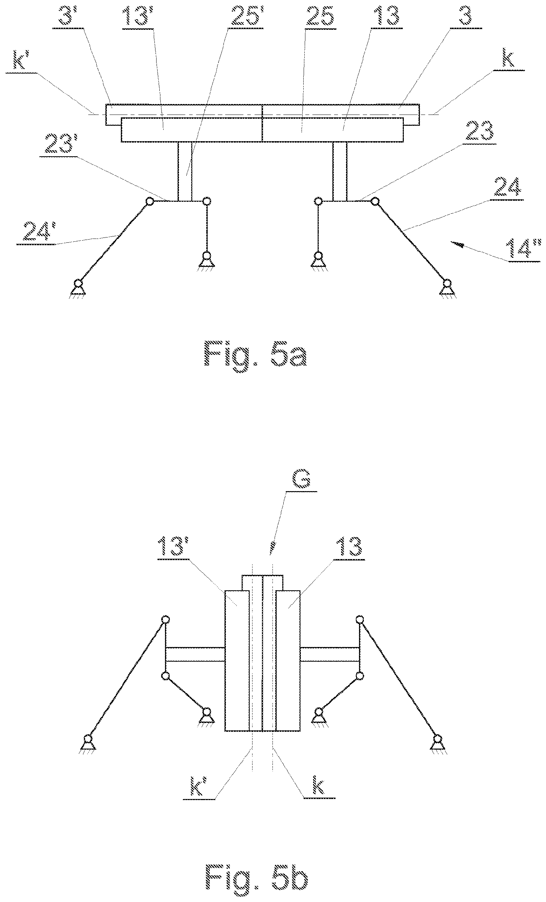

Figs. 5a and 5b show another embodiment of the mechanism 14" for changing the position of the transport sections 13, 13'. The transport section 13, 13' is attached to a bracket 25, 25' connected with a link 23 23' of a four-bar linkage, whereas the link 23, 23' is connected by joints with the links 22, 22' and 24, 24'. In Fig. 5a, the transport sections 13, 13' are in the open configuration, after a clockwise rotation of the link 22, and an anticlockwise rotation of the link 22', the transport sections will change their positions and will be in the closed configuration shown in Fig. 5b where the grooves 15 and the rod-like article 3 layers of the formed group G are situated in two planes which are parallel to each other. The movement of the transport sections 13, 13' may be composed of rotations around axes which are parallel to each other and parallel to the direction of movement of the transport carriage 12 or corresponding to such direction.

The carriages 12 of the forming 4, 4' are driven by means of an electric or magnetic drive mechanism which enables the carriages 12 to move independently of one another with different speeds. Due to the fact that the carriages move independently of one another, it is possible to situate the carriages 12 as shown in Fig. 2a, so that the transport sections 13, 13' of two carriages 12 and 12' are adjacent to each other so that it is possible to transfer the rod-like articles 3 from the drum conveyor 2 to the grooves 15 continuously, i.e. without stopping the drum conveyor 2, 2'. The forming apparatus 5' may start the movement after filling the transport sections of such apparatus still in the course of filling of the transport sections 13, 13' of the forming apparatus 5. The transferring of the rod-like articles 3 from the drum conveyor 102 to the grooves 15 of the forming apparatuses 105, 105' (Fig. 2b) may also take place continuously, i.e. without stopping the drum conveyor 102.

The feeding unit 4, 4' is provided with sensors 26 designed to check the ends of the rod-like articles 3 which may be accessed after placing the rod-like articles 3 onto the transport sections 13, 13' and with sensors 27 designed to X-ray the rod-like articles 3. In addition, the feeding unit 4, 4' is provided with sensors 28 designed to check such ends of the rod-like articles 3 which may be accessed after assembling the transport sections 13, 13'. The groups G in which defective rod-like articles 3 have been detected may be rejected in a further part of their path of movement.

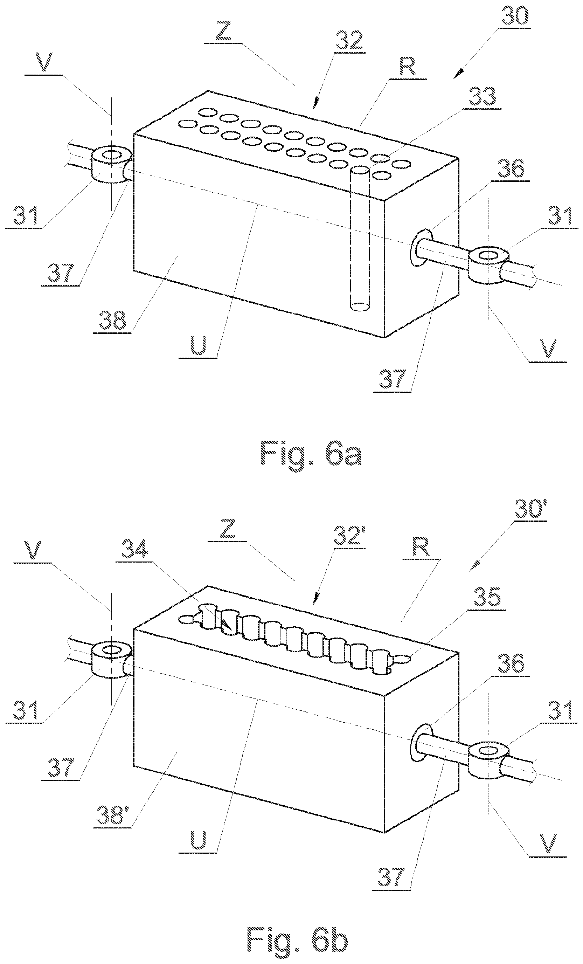

The segment conveyor 7 consists of multiple transport segments 30, whereas the transport segments 30 are connected by joints 31 having axes V, such as chain links (Fig. 6a). The transport segment 30 has a longitudinal axis U which connects the joints 31 of the transport segment 30, i.e. the longitudinal axis U passes through the axes V of the joints 31. The transport segment 30 is provided with a transport pocket 32 in the body 38 adapted to receive the groups G of rod-like articles 3. Fig. 6a shows an embodiment of the transport segment 30 wherein the transport pocket 32 has multiple openings 33 for the rod-like articles 3. The transport pocket 32 is situated in the segment 30 so that the axis Z, centrally situated in the pocket 32 and parallel to the axis R of the openings 33, is perpendicular to the longitudinal axis U. The rod-like articles 3 situated in the transport pocket 32 determine the mutual orientation of the rod-like articles 3 during the transport of the rod-like articles 3 to the packing module 8. Fig. 6b shows an embodiment of the transport segment 30' wherein the transport pocket 32' is made in the body 38' as one opening 34 having multiple grooves 35 for the rod-like articles. The axis Z, centrally situated in the transport pocket 32' and parallel to the axis R of the grooves 35, is perpendicular to the longitudinal, axis U of the transport segment 30'. The transport pocket 32, 32' together with the body 38, 38' is mounted rotatably around the longitudinal axis U. On both sides of the pocket 32, 32', there are situated bearings 36 so that the transport pocket 32 may rotate relative to connectors 37, thus also relative to the joints 31 and the adjacent transport segments.

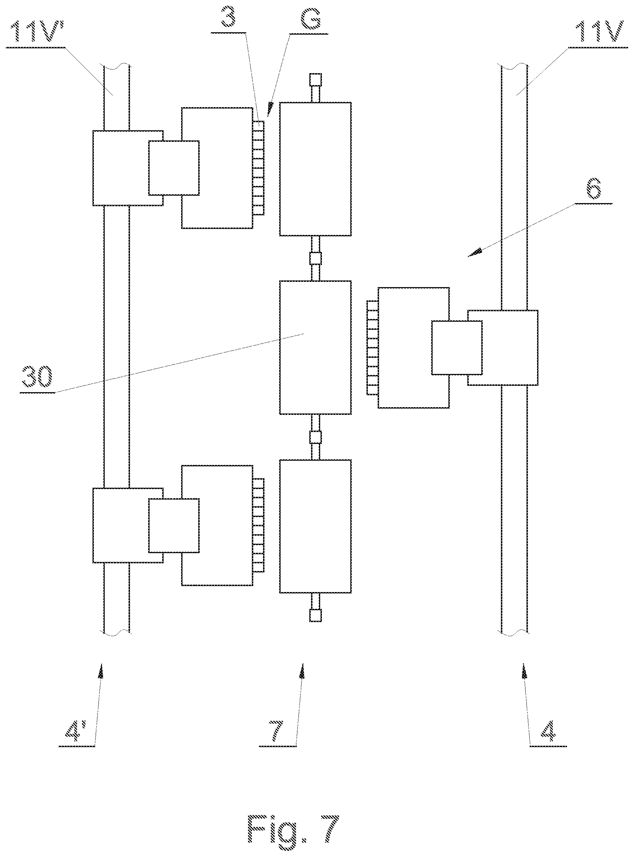

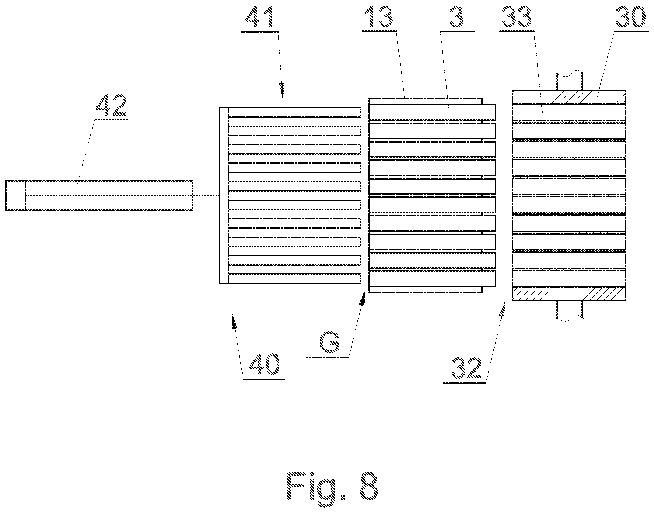

Fig. 7 shows a transferring unit 6 for transferring the groups G of the rod-like articles 3 from the feeding unit 4, 4' to the segment conveyor 7, whereas the transferring unit 6 is situated between vertical sections 11V, 11V' of a guide 11, 11' of the feeding unit 4, 4'. Fig. 7 shows two forming apparatuses 4, 4', whereas it is possible to transfer the groups G to the segment conveyor 7 from one forming apparatus 4. In the embodiment of the transferring unit 6 shown, three transferring apparatuses are to be used. In Fig. 8, the transport pocket 32 of the transport segment 30 is shown in cross-section, in addition, the transport section 13 of the forming apparatus 4, 4' and the transferring apparatus 40 are shown. The transferring apparatus 40 comprises a pusher 41 moved by means of an actuator 42 or another drive element with a linear movement. In the transferring unit 6, the rod-like articles 3 which are situated in the grooves 15 of the respective transport sections 13 will be inserted into the openings 33 of the respective transport pockets 32.

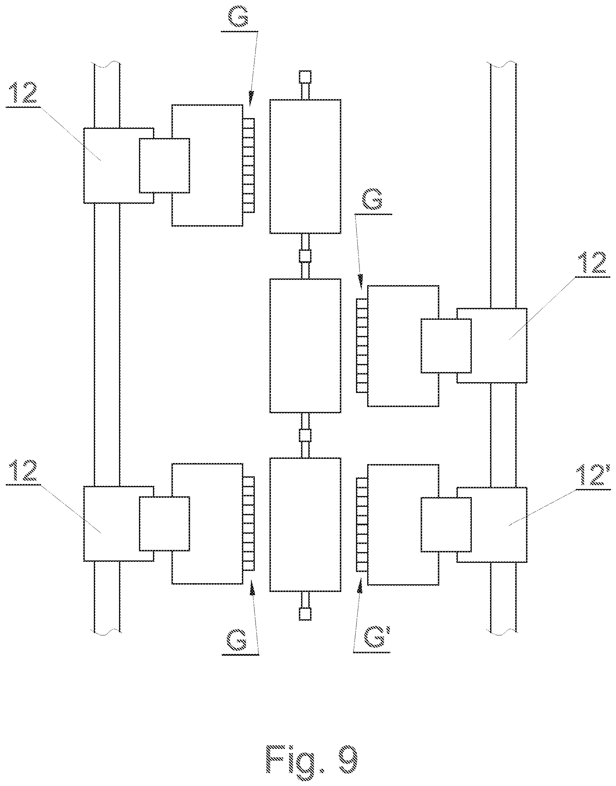

If defective rod-like articles 3 on the transport sections 13, 13' are detected, it is possible to replace the group G carried on one carriage 12 with the group G carried on the next carriage 12. It is possible due to the fact that the carriages 12 move independently of one another. Fig. 9 shows a situation where the carriages 12 carry the groups G containing only good rod-like articles 3, and the carriage 12' carries the group G' containing defective rod-like articles 3. The rod-like articles 3 from the carriages 12 will be placed into the pockets 32 of the transport segments 30, and the rod-like articles 3 from the carriage 12' will be further conveyed downwards and rejected, for example gravitationally at the lower section of the guide 11 by shutting off the vacuum or after stopping by means of a pusher.

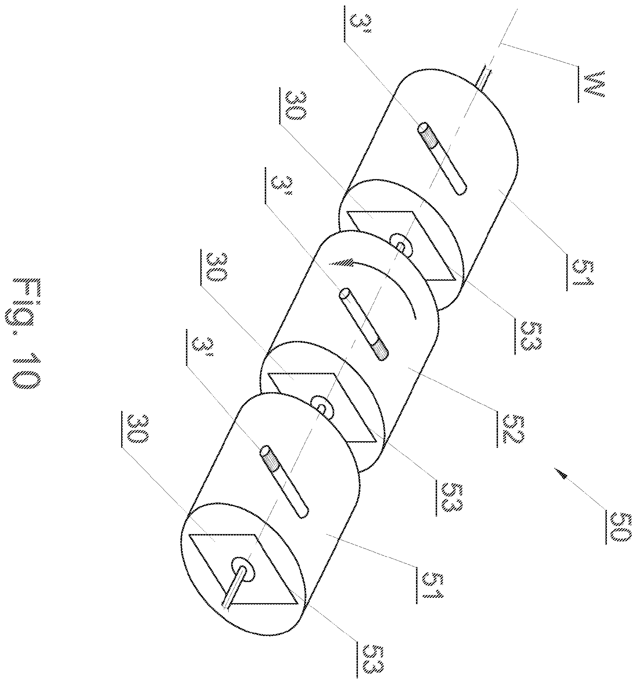

If the feeding apparatuses 4, 4' feed cigarettes with a filter, the adjacent pockets will be filled with cigarettes whose filters will be oriented in opposite directions. However, in the packing module 8 all cigarettes must be oriented in the same direction. The segment conveyor 7 passes through the turning unit 50 whose task is to turn the transport segments 30, 30' so that the rod-like articles 3 collected in the transport pockets 32, 32' have the same orientation. The turning unit 50 is provided with two stationary blocks 51 and a rotatable block 52 situated between the stationary blocks 51 as shown in Fig. 10. Fig. 10 shows the cigarettes 3' representing the orientation of all cigarettes in the respective transport segments 30, 30'. Both the stationary block 51 and the rotatable block 52 are provided with a through channel 53 whose cross-section is adapted to the cross-section of the transport segment 30, 30'. After stopping the segment conveyor 7 in the position shown in Fig. 10, the rotatable block 52 rotates by 180° around the axis W overlapping the axes U of the respective transport segments 30, 30'. After passing through the turning unit 50 in all transport segments 30, 30', the rod-like articles 3 in the transport pockets 32, 32' have the same orientation. An embodiment wherein the central block will be stationary and the outer blocks will be rotatable is also possible.

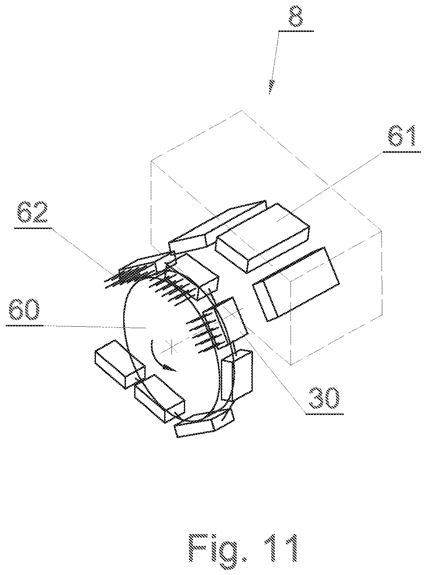

The transport segments 30, 30' of the segment conveyor 7 move further to the packing module 8. The transport segments 30, 30' are placed onto a transport wheel 60 (Fig. 11). The transport wheel 60 makes a rotational movement by leaps. The transport wheel 60 stops when three filled transport segments 30, 30' are situated directly opposite the packing channels 61. The pushers 62 push the groups G of the rod-like articles 3 from the transport pockets 30, 30' to the packing channels 61. After pushing the rod-like articles 3, the transport wheel 60 makes a rotation by a certain angle so that three successive filled transport segments 30, 30' will be situated directly opposite the packing channels 61. The pushers 62 together with the not shown guides and the drive unit constitute the transferring unit 63 in the packing module 8.

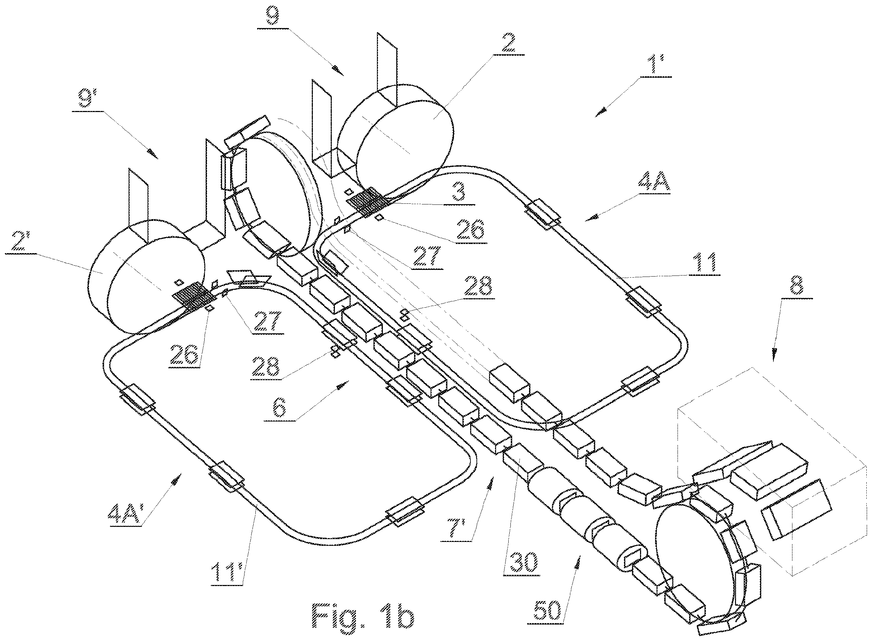

Fig. 1b shows an embodiment of the packing apparatus 1' which comprises two drum conveyors 2, 2' for feeding the rod-like articles 3, two feeding units 4A, 4A' provided with forming apparatuses 5 for forming and transporting the groups G of the rod-like articles 3, a transferring unit 6, a segment conveyor 7' for conveying the group G of the rod-like articles 3 and a packing module 8. The packing apparatus 1' has a similar structure as the packing apparatus 1 shown in Fig. 1a, the difference consists in that the feeding units 4A, 4A' are situated horizontally. In connection with the horizontal situation of the feeding units 4A, 4A', the path of movement of the segment conveyor is changed 7'. The functions of respective units of the packing apparatus 1' are unchanged in comparison to the first embodiment.

## Claims

1. A forming apparatus (5) for determining the mutual spatial orientation of a group (G) of two layers of rod-like
articles (3) of the tobacco industry, comprising
a transport carriage (12), and
a transport tray provided with a number of transport grooves (15) adapted to hold rod-like articles (3), whereas the tray is fastened to the transport carriage (12)
**characterised in that**
the transport tray is divided into two transport sections (13, 13'), whereas the transport sections (13, 13') are adapted to shift between an open configuration in which the transport grooves (15) are situated in substantially one plane (k, k') and a closed configuration in which the transport grooves (15) are situated in two planes (k, k') which are substantially parallel to each other.

2. The apparatus as in claim 1 **characterised in that** the sections (13, 13') are fastened to the carriage (12) in such a way that they rotate relative to the transport carriage (12) relative to two axes.

3. The apparatus as in claim 1 or 2 **characterised in that** the tray is divided into two transport sections (13, 13') which are fastened in such a way that they rotate relative to the carriage about an axis corresponding to the direction of movement of the transport carriage (12).

4. The apparatus as in any of the claims 1 to 3 **characterised in that** the sections (13, 13') are fastened in such a way that they rotate relative to the transport carriage (12) about an axis parallel to the direction of movement of the transport carriage (12).

5. The apparatus as in any of the preceding claims **characterised in that** the transport carriage (12) is individually controlled and is driven by an electric linear motor.

## Patentansprüche

1. Eine Formungsvorrichtung (5) zur Bestimmung der gegenseitigen räumlichen Ausrichtung einer Gruppe (G) von zwei Lagen stabförmiger Artikel (3) der Tabakindustrie. Sie umfasst einen Transportwagen (12) und eine Transportschale, die mit einer Anzahl von Transportrillen (15) versehen ist, welche dazu geeignet sind, stabförmige Artikel (3) zu halten, während die Schale an dem Transportwagen (12) befestigt ist und **dadurch gekennzeichnet ist, dass** sie in zwei Transportabschnitte (13, 13') unterteilt ist, wohingegen die Transportabschnitte (13, 13') zwischen einer offenen Konfiguration, in der die Transportrillen (15) im Wesentlichen in einer Ebene (k, k') liegen, und einer geschlossenen Konfiguration, in der die Transportrillen (15) in zwei Ebenen (k, k') liegen, die im Wesentlichen parallel zueinander sind, umgeschaltet werden können.

2. Die Vorrichtung gemäß Anspruch 1, die sich **dadurch kennzeichnet, dass** die Abschnitte (13, 13') so an dem Wagen (12) befestigt sind, dass sie sich relativ zu dem Transportwagen (12) um zwei Achsen drehen.

3. Die Vorrichtung gemäß Anspruch 1 oder 2, die sich **dadurch kennzeichnet, dass** die Schale in zwei Transportabschnitte (13, 13') unterteilt ist, die so befestigt sind, dass sie sich relativ zum Wagen um eine Achse drehen, die der Bewegungsrichtung des Transportwagens (12) entspricht.

4. Die Vorrichtung gemäß einem der Ansprüche 1 bis 3, die **dadurch gekennzeichnet ist, dass** die Abschnitte (13, 13') so befestigt sind, dass sie sich relativ zum Transportwagen (12) um eine Achse parallel zur Bewegungsrichtung des Transportwagens (12) drehen.

5. Die Vorrichtung gemäß einem der vorhergehenden Ansprüche, die sich **dadurch kennzeichnet, dass** der Transportwagen (12) individuell gesteuert wird und von einem elektrischen Linearmotor angetrieben wird.

## Revendications

1. Un appareil de mise en forme (5) pour la détermination de l'orientation dans l'espace réciproquement d'un groupe (G) de deux couches d'articles en forme de tige (3) de l'industrie du tabac, composé d'un chariot de transport (12) et d'un plateau de transport garni d'un certain nombre de rainures de transport (15) adaptées pour contenir des articles en forme de tige (3), dans lequel le plateau est fixé au chariot de transport (12) **caractérisé en ce que** le plateau de transport est divisé en deux sections de transport (13, 13'), dans lequel les sections de transport (13, 13') sont adaptées pour se déplacer entre une configuration ouverte dans laquelle les rainures de transport (15) sont situées sensiblement sur un même plan (k, k') et une configuration fermée dans laquelle les rainures de transport (15) sont situées sur deux plans (k, k') qui sont sensiblement parallèles l'un à l'autre.

2. L'appareil suivant la revendication 1 **caractérisé en ce que** les sections (13, 13') sont fixées au chariot (12) de telle sorte qu'elles pivotent par rapport au chariot de transport (12) par rapport à deux axes.

3. L'appareil suivant la revendication 1 ou 2 **caractérisé en ce que** le plateau est divisé en deux sections de transport (13, 13') qui sont fixées de telle sorte qu'elles pivotent par rapport au chariot autour d'un axe correspondant à la direction du mouvement du chariot de transport (12).

4. L'appareil suivant l'une ou l'autre des revendications 1 à 3 **caractérisé en ce que** les sections (13, 13') sont fixées de telle sorte qu'elles pivotent par rapport au chariot de transport (12) autour d'un axe parallèle à la direction du mouvement du chariot de transport (12).

5. L'appareil suivant l'une quelconque des précédentes revendications **caractérisé en ce que** le chariot de transport (12) est contrôlé de façon individuelle et est entraîné par un moteur électrique linéaire.
